Europäisches Patentamt

European Patent Office

Office européen des brevets

(11) Veröffentlichungsnummer: **0 302 274 B1**

## EUROPÄISCHE PATENTSCHRIFT

(45) Veröffentlichungstag der Patentschrift: **07.10.92**

(21) Anmeldenummer: **88111251.0**

(22) Anmeldetag: **13.07.88**

(51) Int. Cl.5: **H01G 4/30,** H01C 7/10, H01C 1/14

(54) Elektrisches Vielschichtbauelement und Verfahren zu dessen Herstellung.

(30) Priorität: **31.07.87 DE 3725454**

(43) Veröffentlichungstag der Anmeldung:
**08.02.89 Patentblatt 89/06**

(45) Bekanntmachung des Hinweises auf die
Patenterteilung:
**07.10.92 Patentblatt 92/41**

(84) Benannte Vertragsstaaten:
**AT BE CH DE ES FR GB IT LI**

(56) Entgegenhaltungen:
**DE-A- 3 612 084**
**GB-A- 2 162 371**
**US-A- 3 679 950**
**US-A- 4 071 880**

(73) Patentinhaber: **SIEMENS AKTIENGESELL-**
**SCHAFT**
**Wittelsbacherplatz 2**
**W-8000 München 2(DE)**

(84) Benannte Vertragsstaaten:
**BE CH DE ES FR GB IT LI**

(73) Patentinhaber: **Siemens Bauelemente 0HG**
**Siemensstrasse 43**

**A-8530 Deutschlandsberg(AT)**

(84) Benannte Vertragsstaaten:
**AT**

(72) Erfinder: **Unterlass, Josef, Dipl-Ing.**
**Leonhardstrasse 100 a**
**A-8010 Graz(AT)**
Erfinder: **Ramler, Johann, Dr.**
**Hauptplatz 14**
**A-8530 Deutschlandsberg(AT)**
Erfinder: **Florian, Heinz, Dipl.-Ing.**
**Eschensiedlung 45**
**A-8530 Deutschlandsberg(AT)**
Erfinder: **Zettl, Franz, Dr.**
**Franz-Kogel-Weg 17**
**A-8530 Deutschlandsberg(AT)**
Erfinder: **Moshammer, Anna, Dr.**
**Fischergasse 19/22**
**A-8010 Graz(AT)**
Erfinder: **Kelz, Gerhard, Dipl.-Ing.**
**Bodenfeldgasse 2**
**A-8010 Graz(AT)**

## Beschreibung

Die Erfindung betrifft ein elektrisches Vielschichtbauelement, insbesondere Kondensator, Kaltleiter oder Varistor, mit den Merkmalen a) bis d) des Patentanspruchs 1 sowie ein Verfahren zu dessen Herstellung mit den Verfahrensschritten a) bis g) des Patentanspruchs 12.

Elektrische Vielschichtkondensatoren mit einem gesinterten, quaderförmigen Keramikkörper aus dielektrischem Material, auf die sich die vorliegende Erfindung vorzugsweise bezieht, sind bereits in vielfacher Weise in der Patentliteratur beschrieben worden. Von dieser vielfältigen Patentliteratur kommen der vorliegenden Erfindung die USA-Patentschriften 3 679 950, 4 071 880 und 4 658 328, die der DE-OS 36 12 084 entspricht, am nächsten.

In der US-PS 3 679 950 ist ein keramischer Vielschichtkondensator beschrieben, der die Merkmale des eingangs angegebenen Vielschichtkondensators aufweist, mit der Ausnahme, daß die Bereiche für Anschlußmetallisierungen alternierend von Lage zu Lage nur zu einander gegenüberliegenden Stirnflächen, nicht aber zu den angrenzenden Seitenflächen hin offen sind.

In dieser USA-Patentschrift ist auch ein Verfahren zur Herstellung eines solchen elektrischen Vielschichtkondensators beschrieben, bei dem sämtliche oben angegebenen Verfahrensschritte verwirklicht sind, jedoch mit der Maßgabe, daß die gemäß Verfahrensschritt b) aufzutragenden Suspensionsbereiche derart ausgewählt sind, daß letztlich nur jeweils zu einer Seite reichende Bereiche entstehen. Da im fertigen Stapel aus mehreren derart vorbereiteten Schichten die Suspensionsbereiche praktisch rundherum verschlossen sind, ist es erforderlich, daß bereits dieser Stapel längs von senkrecht zueinander stehenden Trennlinien in Einzelkörper aufgetrennt wird, damit beim nachfolgenden Sintervorgang, für den ein entsprechendes Aufheiz-, Sinter- und Abkühlschema erforderlich ist, das Entweichen und/ oder das Zersetzen der zu entfernenden Bestandteile aus den Suspensionsbereichen zur Bildung der genannten erfolgen kann.

Zur Herstellung der Kondensator-Anschlußmetallisierungen zwischen den Schichten aus keramischen Material wird - neben anderen Möglichkeiten - niedrig schmelzendes Metall oder niedrig schmelzende Metallegierungen, beispielsweise Blei oder eine Legierung aus 50 % Bi, 25 % Pb, 12,5 % Sn und 12,5 % Cd angegeben. Alle diese Legierungen haben Schmelztemperaturen, die beträchtlich niedriger sind, als die für die Sinterung des Keramikkörpers erforderliche Sintertemperatur von bis zu 1325° C. Außerdem benetzen diese Legierungen die Oberfläche der Keramikkörper nur sehr schlecht oder gar nicht.

Die Kontaktschichten, meist aus Silber bestehend, werden an den gegenüberliegenden Stirnflächen bei dem in der US-PS 3 679 950 beschriebenen Vielschichtkondensator stets nach dem Einpressen des niedrig schmelzenden flüssigen Metalles und Abkühlen des getränkten Keramikkörpers aufgebracht.

In der US-PS 4 071 880 ist praktisch der gleiche elektrische Vielschichtkondensator mit einem gesinterten, Keramikkörper beschrieben, für den insoweit die gleichen Überlegungen gelten, wie für den aus der US-PS 3 679 950 bekannten Vielschichtkondensator.

In der US-PS 4 071 880 ist darüberhinaus auch die Möglichkeit ausführlich beschrieben, die Kontaktschichten auf die Stirnflächen des Keramikkörpers vor dem Tränken desselben aufzubringen, wofür diese Kontaktschichten porös ausgebildet sein müssen. Sie bewirken, daß geschmolzenes Tränkmetall beim Herausheben aus der Schmelze nicht ausfließen kann, weil die verwendeten Tränkmetalle den Keramikkörper nicht oder nur schlecht benetzen.

Der in der US-PS 4 071 880 beschriebene Vielschichtkondensator besteht aus einer Mehrzahl von wechselweise aufeinanderliegenden Keramikschichten und inneren Anschlußmetallisierungen sowie äußeren Kontaktschichten, die in vorbestimmter Weise mit den Anschlußmetallisierungen verbunden sind. Beispielsweise liegt eine kammartige Struktur vor.

Bei der Herstellung eines solchen Vielschichtkondensators werden zunächst unbehandelte bzw. ungesintere Keramikplättchen (Suspensionsschichten) mit Hilfe eines Abstreif- bzw. Rakelverfahrens unter Verwendung einer Abstreifklinge hergestellt. Diese Keramikplättchen besitzen eine Dicke von 0,05 bis 0,1 mm. Auf die Oberflächen der Keramikplättchen wird dann eine Kohlen- bzw. Kohlenstoffpaste aufgetragen bzw. aufgedruckt, die aus einer Mischung von Kohlebzw. Kohlenstoffpulver und Keramikpulver besteht. Diese Paste (Suspension) wird in abgegrenzten Bereichen aufgetragen, und zwar so, daß die Bereiche für Anschlußmetallisierungen im fertigen Keramikkörper alternierend nur zu gegenüberliegenden Stirnflächen offen sind. Mehrere solcher bedruckter Keramikplättchen werden abwechselnd aufeinanderliegend angeordnet und durch Anwendung einer Druckkraft miteinander zur Bildung einer integrierten Struktur verbunden. Aus dieser integrierten Struktur werden durch Auftrennung längs von senkrecht aufeinanderstehenden Schnittlinien Einzelkörper erzeugt, die bei einer Temperatur oberhalb von 1000° C gebrannt werden, um die keramischen Plättchen zu sintern und um das Kohle- bzw. Kohlenstoffpulver innerhalb der aufgedruckten Kohlenstoffpaste zu beseitigen. Dadurch werden poröse Zwischenschichten mit Keramikpulver in Bereichen erzeugt, in denen die Anschlußmetallisierungen gebildet werden sollen. Im Anschluß daran werden die porösen äußeren Kontaktschichten an die gesinterten Einzelkörper angebracht.

Dies kann dort wie auch bei der vorliegenden Erfindung beispielsweise durch Verfahren erfolgen, die in den US-PSen 3 683 849, 4 526 129, 4 561 954, in der GB-PS 2 106 714, in der DE-PS 27 22 140, oder in der DE-OS 36 38 286 beschrieben sind.

Die Kontaktschichten werden beispielsweise durch Einbrennen einer Paste erhalten, die hauptsächlich aus Nickel besteht, das mit einer Glasurmasse vermischt ist. Der auf diese Weise gebildete Keramikkörper wird dann in einen Druckbehälter eingeführt und in geschmolzenes Blei, das als Leitungsmaterial für die Kondensatorbelegungen dient, bei einer Temperatur der Schmelze von etwa 330 bis 360°C und im dekomprimierten Zustand eingetaucht. Anschließend wird der Druck auf etwa 10 bar (atm) erhöht, so daß geschmolzenes Blei unter Druck in den Keramikkörper eindringt, und zwar ausschließlich durch die porösen äußeren Elektroden hindurch. Der Keramikkörper wird dann aus dem geschmolzenen Blei herausgezogen, abgekühlt und wiederum dem Normaldruck ausgesetzt, so daß sich die Anschlußmetallisierungen aus Blei bilden. Im Anschluß daran werden auf die äußeren Kontaktschichten zusätzlich Schichten aufgetragen, die eine gute Lötbarkeit aufweisen.

Zur Herstellung des beschriebenen Vielschichtkondensators müssen die auf den Keramikkörper aufgebrachten Kontaktschichten porös sein und so ausgebildet bzw. hergestellt werden, daß zunächst ein Eintritt des flüssigen Bleis für die Anschlußmetallisierungen möglich ist, daß sie andererseits aber verhindern, daß das Blei wieder aus dem Keramikkörper herausfließt, wenn dieser aus dem geschmolzenen Blei herausgezogen wird, weil - wie ausdrücklich in Spalte 10, Zeilen 51 bis 58 der US-PS 4 071 880 empfohlen wird - die einzupressende Metallschmelze den Keramikkörper nicht leicht benetzen darf. Mit anderen Worten bilden die porösen Kontaktschichten in bestimmten Zuständen Durchdringungsbarrieren. Die porösen Kontaktschichten bestehen hauptsächlich aus Nickel, das mit Blei nicht reagiert. Die Haftfestigkeit an den Stirnflächen des Keramikkörpers hängt von der Menge der Glasurmasse innerhalb der Paste ab, wobei die Haftstärke mit steigender Menge an Glasurmasse verbessert wird. In diesem Fall jedoch vermindert sich die Anzahl der Poren der Kontaktschichten, so daß die Durchdringung von Blei erschwert wird, während Glaskomponenten die Zwischenschichten blockieren und die Zufuhr von Blei beeinträchtigen. Die elektrostatische Kapazität kann daher nicht in gewünschter Weise eingestellt werden, selbst wenn der Keramikkörper innerhalb der Schmelze einem relativ hohem Druck ausgesetzt wird.

In der US-PS 4 658 328 (entsprechend der DE-OS 36 12 084) ist zur Lösung der beschriebenen Probleme vorgeschlagen, den Keramikkörper im Inneren so zu gestalten, daß sowohl an den einander gegenüberliegenden Stirnflächen als auch zu einem geringen Teil an den angrenzenden Seitenflächen Bereiche entstehen, in denen das geschmolzene Metall beim Injektionsprozeß nicht nur durch die porösen Kontaktschichten hindurch, sondern auch durch die zu einem geringen Teil an den von Kontaktschichten freien Teilbereichen der Seitenflächen eindringen und dennoch nicht wieder ausfließen kann.

Der in der US-PS 4 658 328 beschriebene Vielschichtkondensator weist insofern alle Merkmale des oben angegebenen Vielschichtkondensators auf.

In dieser US-PS bzw. in der entsprechenden DE-OS ist auch ein Verfahren beschrieben, das die für das Herstellungsverfahren oben angegebenen Verfahrensschritte umfaßt, jedoch mit der Maßgabe, daß die an den Stirnflächen angebrachten Kontaktschichten nach wie vor porös sind.

In den nicht vorveröffentlichten deutschen Offenlegungsschriften 36 27 936 und 36 27 929 sind Vielschichtkondensatoren mit einem gesinterten Keramikkörper und Verfahren zu ihrer Herstellung beschrieben, die ebenfalls die Merkmale des eingangs angegebenen Vielschichtkondensators bzw. des Verfahrens zu seiner Herstellung aufweisen. In diesen Offenlegungsschriften wird vorgeschlagen, als niedrig schmelzendes Metall für die Kondensatorbelegungen ein solches zu verwenden, das im Gegensatz zu den für diese Zwecke bisher bekannten Metallen oder Metallegierungen die Oberflächenteile innerhalb des Keramikkörpers gut benetzt. Für diese Metalle bzw. Legierungen sind eine Reihe von Vorschlägen gemacht, die auch als für die vorliegende Erfindung geeignete Metalle oder Metallegierungen gelten.

Das Einpressen dieser Metalle in die Keramikkörper erfolgt gemäß diesen Offenlegungsschriften nach wie vor nur von einer Seite entweder über noch von einer Kontaktschicht freie oder mit einer porösen Kontaktschicht bedeckte Teilbereiche. Im ersten Fall werden die Kontaktschichten nachträglich aufgebracht.

Die Verwendung eines die Oberfläche des Keramikkörpers gut benetzenden Metalles hat den Vorteil, daß dieses Metall aus dem Keramikkörper beim Herausnehmen aus der Metallschmelze nicht mehr herausfließt und daß eine gute Anbindung der Anschlußmetallisierungen an die Kontaktschichten gewährleistet ist.

Beim Einpressen der niedrig schmelzenden Metallegierung durch poröse Kontaktschichten hindurch in den Keramikkörper treten die bereits oben beschriebenen Probleme auf, die sich auch durch die Verwendung gut benetzender Metalle oder Metallegierungen nicht beseitigen lassen, nämlich die Gefahr der Verstopfung der Poren in der porösen Kontaktschicht und damit eine unzureichende Ausfüllung des Keramikkörpers. Beim Anbringen der Kontaktschichten nach dem Einpressen der Metallschmelze und Abkühlen der gefüllten Keramikkörper entstehen wiederum Probleme, die darin bestehen, daß die Anbindung der Anschlußmetallisierungen im Inneren des Keramikkörpers an die Kontaktschichten an den Stirnflächen unzureichend sein kann.

Eine sehr genaue Beschreibung der Herstellung von Vielschichtkondensatoren ist in der US-PS 4 584 629, entsprechend der GB-PS 2 162 371 bzw. der DE-OS 35 09 593, enthalten. Auch bei diesen Kondensatoren werden auf die gegenüberliegenden Stirnflächen der gesinterten Keramikkörper vor dem Einpressen des Metalles die Kontaktschichten aufgetragen. Gleichwohl sind die dort - wie auch die in den anderen Schriften - beschriebenen Maßnahmen zum Herstellen des Keramikkörpers und zum Einpressen von Metallschmelze bei der vorliegenden Erfindung ebenfalls anwendbar.

Keramische Kaltleiter in Schichtbauweise sind beispielsweise in der GB-PS 932 558 und keramische Vielschichtvaristoren sind beispielsweise in der US-PS 4 675 644, entsprechend EP-A-0 189 087, beschrieben, wobei jedoch die Metallbelegungen bereits vor dem Sintern der Keramikkörper durch Verwendung hitzebeständiger Edelmetalle (Pt, Pd, Ag etc.) erzeugt werden, wie dies auch in der US-PS 3 740 624 beschrieben ist.

Der vorliegenden Erfindung liegt die Aufgabe zugrunde, ein elektrisches Vielschichtbauelement und ein Verfahren zu seiner Herstellung anzugeben, um zu gewährleisten, daß einerseits eine gute Anbindung, d.h. eine Verbindung mit geringem elektrischem Übergangswiderstand, zwischen den Anschlußmetallisierungen im Inneren des Keramikkörpers und den Kontaktschichten und möglichst eine vollständige Füllung des Keramikkörper erreicht werden und andererseits eine wesentliche Vereinfachung des Herstellungs-Verfahrens sichergestellt wird. Ferner sollen die Vielschichtbauelemente auch für die Oberflächenmontage (Surface-mounted-devices-SMD) geeignet sein und die dafür bestehenden Anforderungen, wie Benetzbarkeit für Lot, Ablegierbeständigkeit, Widerstandsfestigkeit gegen chemische und Temperatureinflüsse, an die Schaltplatinen angepaßte Geometrie, erfüllen.

Zur Lösung dieser Aufgabe ist das elektrische Vielschichtbauelement der eingangs genannten Art erfindungsgemäß durch die weiteren Merkmale e und f gekennzeichnet.

Das eingangs angegebenen Verfahren zur Herstellung eines elektrischen Vielschichtbauelementes ist erfindungsgemäß durch die weiteren Verfahrensschritte h) und i) gekennzeichnet.

Weiterbildungen sowohl hinsichtlich des erfindungsgemäßen Vielschichtbanelementes als auch des erfindungsgemäßen Verfahrens sind Gegenstand entsprechender Unteransprüche.

Durch die Erfindung werden folgende Vorteile erzielt:

- Durch die abgerundeten Kanten ist die Oberfläche des gefüllten Keramikkörpers so weit abgetragen, daß sogar bei schlecht benetzendem Einpreßmetall das Metall an den Stirnflächen und insbesondere an den angrenzenden Kanten gut mit den Kontaktschichten verbunden ist; insbesondere gilt dies für gut benetzendes Einpressmetall.
- Die Füllung mit Metall wird in kürzeren Zeiten ermöglicht.
- Beim Einpressen werden wegen des ungehinderten Eindringens verkürzte Tränkzeiten und niedrigere Drucke angewendet, wodurch auch eine geringere Belastung der Keramikkörper erfolgt.
- Durch das Aufbringen der Kontaktschichten nach dem Einpressen der Metallschmelze wird vermieden, daß die einzelnen Keramikkörper zu keinem Zeitpunkt des Verfahrens zusammenkleben oder sogar zusammenschmelzen.
- Da es sich überraschenderweise gezeigt hat, daß die Verwendung von Metallen oder Metallegierungen, welche die Oberflächen der Keramikschichten des Keramikkörpers gut benetzen, an den Stirn- und an den angrenzenden Seitenflächen durch Kontraktion des Metalles zu von Metall freien Randbereichen führt, bewirkt das Abscheuern der Kanten einen sicheren Kontakt mit den Kontaktschichten.
- Beim Herstellen der Keramikkörper ist es nicht mehr erforderlich, auf die einzelnen Suspensionsschichten gewissermaßen abgegrenzte Flecke aus der Suspension für die poröse Zwischenschicht herzustellen, sondern es können über die gesamte Breite der Suspensionsschichten sich erstreckende Bereiche aus Suspensionsmaterial in Form von durch Brücken verbundenen Mustern für die poröse Zwischenschicht aufgetragen werden.
- Dadurch ist es auch möglich, nicht nur die Einzelteile zu sintern, sondern es können auch größere Stapel gesintert und- erst nach dem Sintern in einzelne Keramikkörper aufgeteilt werden, weil die sich zersetzenden und entweichenden Bestandteile der porösen Zwischenschicht dennoch aus diesem größeren Stapel austreten können.

- Im Bedarfsfalle können zur Erhöhung der Isolation oder als Feuchteschutz die freien Oberflächenteile der Seitenflächen oder auch das gesamte Vielschichtbauelement mit einer Umhüllung aus an sich bekanntem Isoliermaterial versehen werden.

- An unerwünschten Stellen eventuell vorhandenes Einpreßmetall wird in einfacher Weise bei der mechanischen Behandlung entfernt.

Vorzugsweise bezieht sich die Erfindung auf Vielschichtkondensatoren, sie ist aber auch bei Kaltleitern oder Varistoren anwendbar.

Die Formulierung, wonach "im Volumen der Hohlräume verteilt Keramikpartikel enthalten sind", schließt sowohl einzelne Partikel ein, die als Stützelemente dienen, als auch ein poröses Gerüst, dessen Poren miteinander über das gesamte Volumen hinweg verbunden sind, so daß das eingepreßte flüssige Metall in jedem Falle vollständig eindringen kann.

Der Begriff "keramisches Material mit dielektrischen oder halbleitenden Eigenschaften" schließt insbesondere auch ferroelektrisches, dielektrisches Material mit Perowskitstruktur ein, zum Beispiel vorzugsweise Titanate der Erdalkalien, insbesondere des Bariums und auch Mischtitanate, bei denen Barium durch andere Erdalkalien oder Magnesium substituiert ist und/oder bei denen das Titan beispielsweise durch Zinn substituiert ist. Das dielektrische Material mit Perowskitstruktur kann mit Zusatzstoffen, wie z.B. Antimon, Wismut oder Lanthan oder seltenen Erdmetallen oder auch mit Kupfer, Eisen dotiert sein, so daß höhere Werte der Dielektrizitätskonstanten oder verbesserte Kaltleitereigenschaften (PTC-Eigenschaften) resultieren oder andere elektrische Eigenschaften, wie z.B. deren Temperaturabhängigkeit oder der Verlustfaktor entsprechend den gewünschten Erfordernissen variiert werden. Ferner schließt obiger Begriff auch die hinreichend bekannten Materialien für Varistoren ein, das sind Widerstände, deren Widerstandswert von der anliegenden Spannung abhängig ist, die auch als Voltage Dependent Resistors (VDR) bezeichnet werden und die als Hauptbestandteil Zinkoxid enthalten.

Die Erfindung wird nachfolgend anhand eines in den beigefügten Figuren dargestellten Ausführungsbeispieles für einen Vielschichtkondensator näher erläutert.

Es zeigen:

FIG 1    den Keramikkörper vor der Füllung mit Metall und vor dem Anbringen der Kontaktschichten;

FIG 2    einen fertigen Vielschichtkondensator in Draufsicht auf die Seitenfläche 6;

FIG 3    einen Schnitt längs der Linie III - III in FIG 2;

FIG 4    einen Schnitt längs der Linie IV - IV in FIG 1;

FIG 5    einen Schnitt längs der Linie V - V in FIG 1;

FIG 6    einen Schnitt längs der Linie VI - VI ebenfalls in FIG 1, jedoch nach dem Metalleinpressen;

FIG 7    einen Schnitt längs der Linie V - V ebenfalls in FIG 1, jedoch nach dem Metalleinpressen.

FIG 8    einen Schnitt längs der Linie VIII - VIII in FIG 2, vor dem Anbringen der Kontaktschichten;

FIG 9    einen Schnitt längs der Linie IX - IX in FIG 2, vor dem Anbringen der Kontaktschichten;

FIG 10   einen Schnitt längs der Linie X - X in FIG 2, nach dem Anbringen der Kontaktschichten;

FIG 11   einen Schnitt längs der Linie XI - XI in FIG 2, nach dem Anbringen der Kontaktschichten;

FIG 12   eine Suspensionsschicht mit aufgetragenen Suspensionsmustern in Draufsicht;

FIG 13   eine weitere Suspensionsschicht mit aufgetragenen Suspensionsmustern in Draufsicht;

FIG 14   eine Suspensionsschicht mit anders aufgetragenen Suspensionsmustern in Draufsicht;

FIG 15   eine weitere Suspensionsschicht mit anders aufgetragenen Suspensionsmustern in Draufsicht.

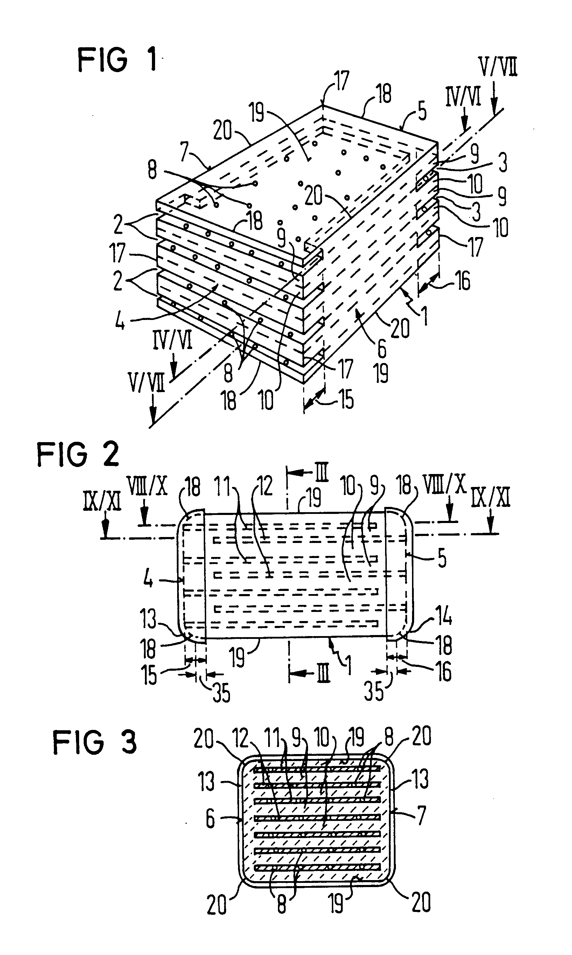

FIG 1 zeigt den gesinterten Keramikkörper 1, der von Bereiche 2, 3 für Anschlußmetallisierungen 11, 12 durchsetzt ist. Die Bereiche 2 sind zur Stirnfläche 4 und die Bereiche 3 sind zur Stirnfläche 5 des Keramikkörpers 1 hin offen, beide Bereiche sind aber auch in Teilbereichen 15, 16 zu den Seitenflächen 6 und 7 hin offen. Die Keramikpartikel 8 sind über die Volumina der Hohlräume 2 und 3 verteilt, und zwar im Sinne der obigen Erläuterung, und dienen als Stützelemente. Der Keramikkörper 1 ist aus Keramikschichten 9 und 10 zusammengesintert, die hier als Dielektrikum dienen.

Kanten 17 befinden sich zwischen den Stirnflächen 4, 5 und den Seitenflächen 6, 7, Kanten 18 befinden sich zwischen den Stirnflächen 4, 5 und einer Ober- und Unterseite 19, während sich Kanten 20 zwischen der Ober- und Unterseite 19 und den Seitenflächen 6, 7 befinden. Die Kanten 17, 18, 20 werden nach dem Einpressen und Erstarren des Metalles der Anschlußmetallisierungen 11, 12 durch mechanische Bearbeitung abgetragen und dadurch abgerundet.

In FIG 1 ist der Keramikkörper 1 in seinem Zustand nach dem Sintern gezeigt, jedoch vor dem Füllen der Bereiche 2 und 3 mit niedrig schmelzendem Metall, vor dessen mechanischer Bearbeitung und vor dem Anbringen der Kontaktschichten 13, 14 an den Stirnseiten 4 und 5.

FIG 2 zeigt einen fertigen Vielschichtkondensator in Draufsicht auf die Seitenfläche 6. Man erkennt den aus den Keramikschichten 9 und 10 zusammengesinterten Keramikkörper 1, dessen Bereiche 2, 3 mit den Anschlußmetallisierungen 11 und 12 gefüllt sind. Alternierend von Lage zu Lage enden diese Anschlußmetallisierungen 11 und 12 an einander gegenüberliegenden Stirnflächen 4 und 5 und sind dort durch die Kontaktschichten 13 und 14 miteinander elektrisch verbunden.

Die Kontaktschichten 13 und 14 können zwar auch, wie in den USA-Patentschriften 3 679 950 und 4 071 880 gezeigt, nur die Stirnflächen bedekken. Diese Kontaktschichten sind selbst lötfähig oder weisen eine lötfähige weitere Schicht auf, an die z.B. Stromzuführungsdrähte angelötet werden können.

Es ist jedoch wegen der besseren elektrischen Verbindung der Anschlußmetallisierungen 11, 12 an den abgerundeten Kanten 17 vorteilhaft, wenn die Kontaktschichten 13 und 14 nicht nur an den Stirnflächen 4 und 5, sondern auch auf den Seitenflächen 6 und 7 wenigstens die Teilbereiche 15, 16 bedeckend ausgebildet sind. Dies ist beispielsweise auch für sogenannte Chip-Bauelemente (für SMD-Anwendung) vorteilhaft, weil diese dann auf eine mit gedruckten Leiterbahnen versehenen Schaltplatine unmittelbar aufgelötet werden können.

Für diesen Fall reichen die Kontaktschichten 13 und 14 soweit auf die angrenzenden Seitenflächen 6 und 7 und auch auf die Ober- und Unterseite 19 herum, daß je eine Auflagefläche mit der Breite 35 resultiert. Diese Breite ist so zu bemessen, daß sie an die Flächen, an denen der Chip-Kondensator anzulöten ist, angepaßt sind.

In FIG 2 sind die abgerundeten Kanten 18 zwischen den Stirnflächen 4, 5 und der Ober- und Unterseite 19 zu erkennen.

In FIG 3, die einen Schnitt längs der Linie III - III in FIG 2 darstellt, sind die Keramikschichten 9 und 10, die Anschlußmetallisierungen 11 und 12 und die Kontaktschicht 13 zu erkennen, die sich im und am Keramikkörper 1 befinden, dessen Kanten 20 zwischen der Ober- und Unterseite 19 und den Seitenflächen 6, 7 abgerundet sind.

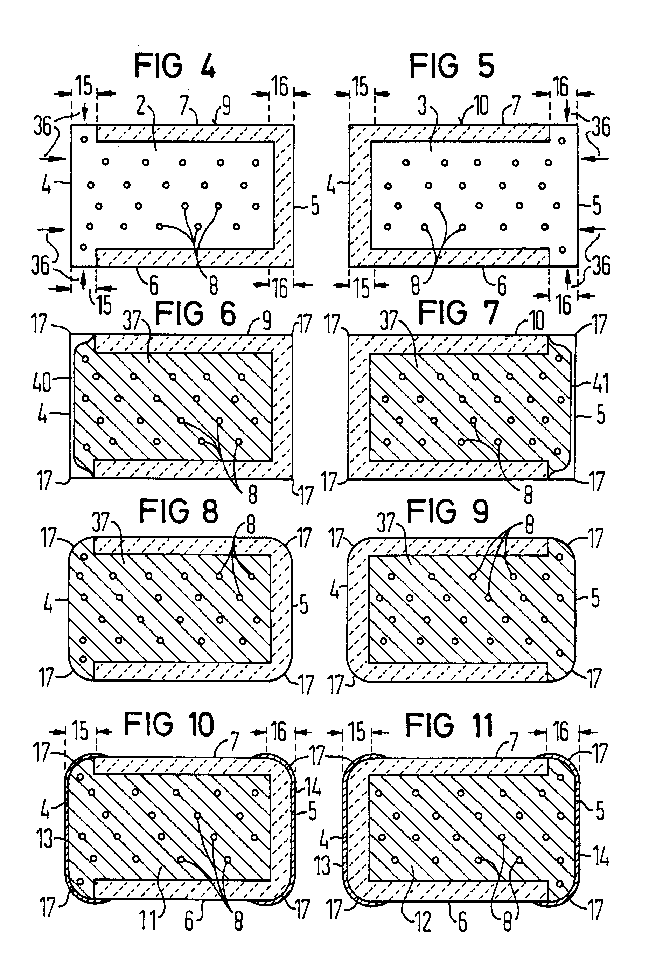

Die FIG 4, 5, 6 und 7 erläutern schematisch den Prozeß des Einpressens der niedrig schmelzenden Metallschmelze.

Die FIG 4 und 5 sind Schnitte längs den Linien IV - IV und V - V in FIG 1, und die FIG 6 und 7 sind Schnitte längs den Linien VI - VI und VII - VII, ebenfalls in FIG 1.

In den FIG 4 und 5 erkennt man die im einzelnen schon beschriebenen Teile, nämlich die Bereiche 2 und 3 und die sich darin über das Volumen verteilt befindenden Keramikpartikel 8. Der Bereich 2 über der Keramikschicht 9 ist zur Stirnfläche 4 hin offen und ebenfalls in einem Teilbereich 15 der Seitenflächen 6 und 7. Der Bereich 3 über der Keramikschicht 10 ist zur Stirnseite 5 und ebenfalls in einem Teilbereich 16 der Seitenflächen 6 und 7 hin offen.

In dieser Form ist ein Keramikkörper im Prinzip aus der bereits diskutierten US-PS 4 658 328 bekannt. Dieser Keramikkörper wird dort jedoch an den Stirnseiten zunächst mit porösen Kontaktschichten versehen, die auf die Seitenflächen und die Oberflächen nur soweit herumreichen daß dennoch ein Teil der zu den Seitenflächen hin offenen Bereiche weiterhin offen verbleibt und dort dann auch Metallschmelze hineingepreßt werden kann.

Im Gegensatz hierzu wird beim Verfahren der vorliegenden Erfindung der mit Bereichen 2, 3 versehene Keramikkörper zunächst mit Metallschmelze gefüllt. Die Metallschmelze wird in die Bereiche 2 und 3 entsprechend der durch die Pfeile 36 gegebenen Richtung hineingepreßt.

Schematisch ist in den FIG 6 und 7 gezeigt, daß die erstarrte Metallschmelze 37 in den an den Stirnseiten 4 bzw. 5 und in den Teilbereichen 15, 16 der Seitenflächen 6 und 7 offenen Bereichen 2, 3 durch die Kontraktion von Metall freie Räume bildet, die an den Stirnflächen 4 mit 40 und an den Stirnflächen 5 mit 41 bezeichnet sind.

Die durch Einpressen von Metall mit Anschlußmetallisierungen gefüllten Keramikkörper 1 werden gemäß der vorliegenden Erfindung danach einer mechanischen Oberflächenbehandlung unterworfen, bei der die Kanten 17, aber auch die Kanten 18 und 20 (vgl. FIG 1, 2 und 3) abgerundet werden.

Die FIG 8 und 9 stellen Schnitte längs der Linien VIII - VIII und IX - IX in FIG 2 dar, jedoch vor dem Anbringen der Kontaktschichten 13 und 14.

Man erkennt in den FIG 8 und 9 wiederum die erstarrte Metallschmelze 37 und die über das Volumen verteilten Keramikpartikel 8.

Ferner wird in diesen beiden Figuren gezeigt, daß durch die mechanische Oberflächenbehandlung die Kanten 17 dermaßen abgerundet sind, daß auch Bereiche 40 und 41 praktisch soweit abgetragen wurden, daß die erstarrte Metallschmelze 37 bis zu den Stirnflächen 4 bzw. 5 hin reicht.

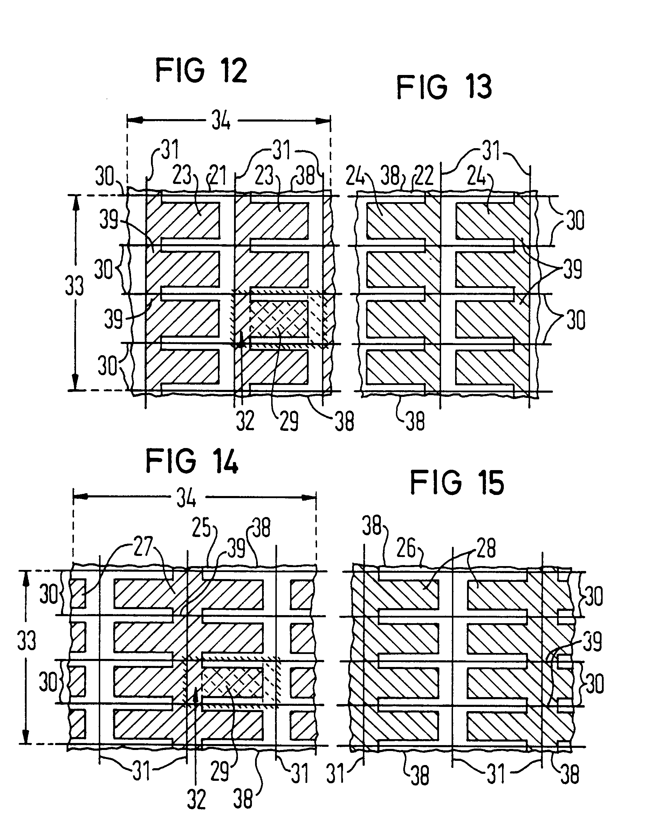

Die FIG 10 und 11 stellen Schnitte längs der Linien X - X und XI - XI in FIG 2 dar.

Durch an sich bekannte Metallisierungsverfahren sind unporöse Kontaktschichten 13 und 14 an den Stirnflächen 4 und 5 und herumreichend auf die Seitenflächen 6 und 7 in den Teilbereichen 15 und 16 aufgetragen.

Die Anbindung, d.h. die elektrische Verbindung zwischen den Kontaktschichten 13, 14 und den Anschlußmetallisierungen 11, 12, ist insbesondere im Bereich der abgerundeten Kanten 17 besonders intensiv, weil dort durch die mechanische Bearbeitung die Oberfläche für die Abscheidung des Kontaktierungsmetalles besonders gut vorbehandelt ist.

In den FIG 12, 13, 14 und 15 ist das Verfahren zur Herstellung des gesinterten Keramikkörpers 1 bis zu einem gewissen Verfahrensstand dargestellt.

Die aus einer Suspension für die Keramikschichten 9 und 10 hergestellten Suspensionsschichten 21 und 22 bzw. 25 und 26 (die Herstellung solcher Suspensionsschichten ist hinreichend bekannt; man bedient sich hierfür vorgebrannter, in Pulverform befindlicher Materialien, die im gesinterten Zustand die Dielektrikumsschichten darstellen sollen und die in einem Suspensionsmittel enthalten sind, das sich beim späteren Aufheizvorgang für die Sinterung verflüchtigt) werden über ihre gesamte Breite 33 mit Mustern 23 und 24 bzw. 27 und 28 versehen.

Die Suspensionsmuster 23 und 24 sind dabei so ausgerichtet, daß die die späteren Bereiche 2, 3 ergebenden Flecken, jeweils durch Brücken 39 miteinander verbunden, eine Reihe über die Breite 33 ergeben.

Demgegenüber sind die Suspensionsmuster 27 und 28 derart ausgestaltet, daß auf jeder Suspensionsschicht 25 bzw. 26 jeweils zwei solcher Reihen direkt aneinandergrenzen.

Die Herstellung einer Suspension für die Suspensionsmuster und die Art ihrer Auftragung auf die Suspensionsschichten 23, 24, bzw. 25, 26 ist ebenfalls z.B. aus den oben angegebenen Patentschriften hinreichend bekannt.

Mehrere solcher derart vorbereiteter Suspensionsschichten 21, 22, bzw. 25, 26 werden jeweils zu einem Stapel derart zusammengelegt, daß die Suspensionsmuster 23, 24 bzw. 27, 28 sich in einem relativ großen Teilbereich 29 überlappen, wie dies in den FIG 12 und 14 schraffiert umrandet dargestellt ist. Der Überlappungsbereich 29 liegt praktisch in der Mitte des Einzelkörpers 32 (schraffiert umrandet), der entsteht, wenn man die aus den mit den Suspensionsmustern versehenen Suspensionsschichten übereinander stapelt und nach einem Preßvorgang längs den Schnittlinien 30 in Längsrichtung und den Schnittlinien 31 in Querrichtung vor oder nach dem Sintern aufteilt.

Die gewählte Art der Form der Suspensionsmuster erlaubt es, daß nicht nur Einzelkörper 32 im Rohzustand gesintert werden können, sondern daß auch ein aus mehreren Suspensionsschichten gebildeter Stapel nach der Anwendung von Druck und gegebenenfalls Wärme gesintert werden kann, weil durch die Brücken 39 die Suspensionsmuster 23, 24, 27, 28 im Bereich dieser Brücken 39 bis zu den Außenrändern 38 der Suspensionsschichten 21, 22, 25, 26 reichen, so daß dort die durch Aufheizung zu verflüchtigenden Anteile der Suspension der Suspensionsmuster entweichen können.

Man erkennt aus den FIG 12, 13, 14 und 15, daß Länge 34 und Breite 33 der Suspensionsschichten je ein Vielfaches der Breite und Länge der späteren Keramikkörper 1, dargestellt durch die Einzelkörper 32, betragen.

## Ausführungsbeispiel

Eine Anzahl von Suspensionsschichten (Keramikfolien) wird an den Stellen, wo im fertigen Vielschichtbauelement, insbesondere dem Vielschichtkondensator, die Anschlußmetallisierungen sind, mit einer Rußpaste, bestehend aus Lösungsmittel, Ruß, Harz und bis zu 30 Gew.-% Keramikpulver (das in seiner Zusammensetzung vorzugsweise dem Keramikmaterial des Keramikkörpers entspricht) bedruckt, wobei die Metallisierungsform so gewählt ist, daß im fertigen Bauelement die Anschlußmetallisierung nicht nur an den Stirnflächen, sondern auch in den an sie angrenzenden Teilbereichen der Seitenflächen, nach außen geführt ist. Die Keramikfolien werden nun so übereinander geschichtet, daß die bedruckten Flächen im ungesinterten Keramikkörper abwechselnd an eine der Stirnflächen geführt sind. Die Stapel werden gepreßt und dann in Einzelteile zerteilt. Diese Einzelteile werden dann in einer Schutzgasatmosphäre auf 400° C aufgeheizt, wobei die Lösungsmittel der Rußpaste abdampfen, das Harz gecrackt und ebenfalls abgedampft wird. In einem weiteren Schritt werden die Einzelteile in Luft auf 1100 bis 1300° C aufgeheizt, je nach der verwendeten Keramikart, wobei zuerst der Kohlenstoff des Russes und die Restbestandteile des gecrackten Harzes verbrennen und dann die Keramik zusammensintert. Die so hergestellten Teile bestehen aus Schichten aus dichter dielektrischer Keramik und aus Stützelemente enthaltenden Bereichen, die abwechselnd zu der einen Stirnfläche und zu der anderen Stirnfläche und an Teilbereichen der Seitenflächen des Keramikkörpers offen sind.

Die so hergestellten Teile werden in einem Autoklaven mit flüssiger Metallschmelze (Blei oder Bleilegierung, die die Keramik gut benetzt) gebracht und evakuiert auf p kleiner 1 mbar. Sodann werden die Teile vollständig in die Metallschmelze getaucht; mit 10 bis 20 bar wird die Metallschmelze in die Bereiche 2, 3 hineingepreßt, vorzugweise unter Stickstoffatmosphäre, damit die Oberfläche der Metallschmelze nicht zu stark oxidiert. Nach 20 bis 120 sec werden die Teile aus dem Metallbad herausgehoben, von überschüssiger Metallschmelze durch Schütteln befreit und unter den Schmelzpunkt des Metalls abgekühlt, wonach der Druck im Autoklaven abgelassen wird und die Teile herausgenommen werden.

Die Keramikkörper, welche nun Anschlußmetallisierungen enthalten, werden danach mit SiC-Pulver gemischt und mit Wasser in eine V2A-Dose gefüllt. Die Dose, die die Keramikkörper, SiC-Pulver und Wasser enthält, wird nun auf einem Walzenstuhl oder einer ähnlichen Einrichtung ca. 3 Std. mit 60 bis 100 Umdrehungen pro Minute gedreht, so daß die Keramikkörper durch das SiC-Pulver gescheuert werden. Bei dieser Behandlung werden die Oberflächen von anhaftenden Bleiverunreinigungen gereinigt, während die Kanten und Ecken bevorzugt abgetragen, d.h. abgerundet werden, so daß nach dem Scheuern die Anschlußmetallisierungen, die sich beim Herausziehen aus der Metallschmelze stets durch Kontraktion etwas von den Stirn- und Seitenflächen zurückziehen, bzw. etwas ausfließen, bis an die Stirnseiten des Keramikkörpers reichen. Die Teile werden nach dem Scheuern mit einem Sieb vom Wasser und vom SiC-Pulver getrennt und danach getrocknet.

In einem nächsten Schritt werden an den Stirnflächen der Keramikkörper Kontaktschichten als Außenelektroden aufgesputtert, und zwar derart, daß auch die Teile der Anschlußmetallisierungen, die an den an die Stirnflächen angrenzenden Teilbereichen der Seitenflächen sich befinden, von den Kontaktschichten bedeckt werden.

Die Kontaktschichten werden vorzugsweise aus drei Schichten mit folgenden Eigenschaften aufgebaut.

Die erste Schicht wird vorzugsweise aus Aluminium gebildet, welches eine gute Haftschicht auf Keramik abgibt und einen geringen Übergangswiderstand im fertigen Kondensator garantiert.

Die zweite Schicht wird bevorzugt aus Nickel oder Nickel-Vanadium gebildet, welche eine Sperrschicht für das Löten darstellen.

Als dritte Schicht wird eine Silberschicht aufgetragen, welche eine gute Lötfähigkeit des fertigen Bauelementes garantiert.

Diese drei Schichten werden nach an sich bekannten Verfahren aufgetragen, insbesondere aufgesputtert.

Eine bevorzugte Ausführungsform der Kontaktschichten besteht darin, daß die Aluminiumschicht 0,5 $\mu$m, die Nickel-Vandium-Schicht 1,5 $\mu$m und die Silberschicht 1 $\mu$m dick sind. Diese Kontaktschicht erfüllt zwar alle Anforderungen an Lötbarkeit und elektrische Kontaktgabe, sie ist jedoch für gewisse Anforderungen noch nicht unbegrenzt lagerfähig. Wird eine Lagerfähigkeit von mindestens 2 Jahren gefordert, festgestellt durch einen Benetzbarkeitstest nach einer Lagerung von 16 Stunden bei 155°C, so empfiehlt es sich, die Kontaktschicht noch durch Tauchverzinnen (Schwallverzinnen) zu verstärken. Auf diese Weise hergestellte Vielschicht-Keramikkondensatoren erfüllen alle Anforderungen für SMD-Teile.

**Patentansprüche**

1. Elektrisches Vielschichtbauelement, insbesondere Kondensator, Kaltleiter oder Varistor, mit den Merkmalen:

a) ein gesinterter quaderförmiger Körper (1) aus Schichten (9,10) aus keramischem Material mit dielektrischen oder halbleitenden Eigenschaften;

b) zwischen den Schichten (9,10) aus keramischem Material befinden sich Anschlußmetallisierungen (11,12) aus einem Metall oder einer Metallegierung, deren Schmelztemperaturen erheblich niedriger sind, als die für die Sinterung erforderliche Temperatur;

c) Bereiche (2,3) für die Anschlußmetallisierungen (11,12) zwischen den Schichten (9,10) aus keramischem Material enthalten alternierend von Schicht zu Schicht zu einander gegenüberliegenden Stirnseiten (4,5) und jeweils in einem Teilbereich (15,16) zu den angrenzenden Seitenflächen (6,7) hin Stützelemente in Form von im Metallvolumen verteilten Keramikpartikeln (8);

d) an den Stirnflächen (4,5) und auf die Seitenflächen (6,7) herumreichend sind Kontaktschichten (13,14) vorhanden, die jeweils die Anschlußmetallisierungen (11,12) elektrisch leitend verbinden und selbst oder durch eine weitere Metallauflage lötfähig sind,

**gekennzeichnet durch** die weiteren Merkmale:

e) beim quaderförmigen Körper (1) sind Kanten (17) zwischen den Stirnflächen (4,5) und den Seitenflächen (6,7), Kanten (18) zwischen den Stirnflächen (4,5) und der Körperunterseite sowie Kanten (20) zwischen der Körperoberseite und den Seitenflächen (6,7) durch mechanische Bearbeitung derart abgerundet, daß die Anschlußmetallisierungen (11,12) bis zu den Kontaktschichten reichen;

f) die Kontaktschichten (13,14) an den Stirnflächen (4,5) bedecken auf den Seitenflächen (6,7) wenigstens die mit Anschlußmetallisierungen (11,12) gefüllten Teilbereiche (15,16) der Bereiche (2,3).

2. Elektrisches Vielschichtbauelement nach Anspruch 1,
**dadurch gekennzeichnet, daß**
die Anschlußmetallisierungen (11,12) aus einem Metall oder einer Metallegierung bestehen mit der Eigenschaft, im flüssigen Zustand die Flächen der Schichten (9,10) aus keramischem Material in den Bereichen (2,3) gut zu benetzen.

3. Elektrisches Vielschichtbauelement nach Anspruch 1,
**dadurch gekennzeichnet, daß**
die Anschlußmetallisierungen (11,12) aus einer Blei-Indium-Legierung mit einem Indiumanteil von gleich oder größer als 0,5 Gew-%, insbesondere 2,5 bis 20 Gew-% bestehen.

4. Elektrisches Vielschichtbauelement nach Anspruch 1,
**dadurch gekennzeichnet, daß**
die Anschlußmetallisierungen (11,12) aus einer Blei-Silber-Indium-Legierung mit wenigstens 0,5 Gew-% Indium und insgesamt 20 Gew-% Silber und Indium bestehen.

5. Elektrisches Vielschichtbauelement nach Anspruch 1,
**dadurch gekennzeichnet, daß**
die Anschlußmetallisierungen (11,12) aus Kupfer-Indium- oder Silber-Indium-Legierungen bestehen.

6. Elektrisches Vielschichtbauelement nach Anspruch 1,
**dadurch gekennzeichnet, daß**
die Kontaktschichten (13,14) aus Nickel oder Legierungen mit eine hohen Nickelanteil bestehen.

7. Elektrisches Vielschichtbauelement nach Anspruch 1,
**dadurch gekennzeichnet, daß**
die Kontaktschichten (13,14) aus Silber oder Legierungen mit einem hohen Silberanteil bestehen.

8. Elektrisches Vielschichtbauelement nach Anspruch 1,
**dadurch gekennzeichnet, daß**
die Kontaktschichten (13, 14) mehrschichtig sind und in Nachbarschaft zum quaderförmigen Körper (1) aus einer ersten Schicht aus Aluminium (Al) oder Chrom (Cr), darauf einer zweiten Schicht aus Nickel (Ni) oder Nickel-Vanadium (NiV) und darauf einer dritten Schicht aus Silber (Ag) bestehen.

9. Elektrisches Vielschichtbauelement nach Anspruch 8,
**dadurch gekennzeichnet, daß**
über der Silberschicht eine Zinnschicht (Sn) angeordnet ist.

10. Elektrisches Vielschichtbauelement nach Anspruch 8,
**dadurch gekennzeichnet, daß**
die Aluminiumschicht 0,5 $\mu$m, die zweite Schicht aus NiV 1,5 $\mu$m und die dritte Schicht 1 $\mu$m dick sind.

11. Elektrisches Vielschichtbauelement nach Anspruch 1,
**dadurch gekennzeichnet, daß**
wenigstens die von Kontaktschichten (13, 14) freien Bereiche der Seitenflächen (6, 7) mit elektrisch isolierendem und feuchtedichtem Material bedeckt sind.

12. Verfahren zur Herstellung eines elektrischen Vielschichtbauelementes nach Anspruch 1 mit den Verfahrensschritten:

a) es werden 0,03 bis 0,1 mm dicke Schichten (21,22,25,26), deren Breite (33) und Länge (34) je ein Vielfaches der Breite und Länge der späteren quaderförmigen Körper (1) betragen, aus einer Suspension, die dielektrisches oder halbleitendes Material in feiner Verteilung enthält, hergestellt und getrocknet,

b) auf diese Schichten (21, 22, 25, 26) werden in Form von abgegrenzten Bereichen Muster (23, 24, 27, 28) in bestimmter Anordnung und in einer Dicke von 0,005 bis 0,02 mm aus einer Suspension aufgetragen (z.B. aufgedruckt) und eingetrocknet, die beim späteren Sintern gemäß Verfahrensschritt e) entweichende Bestandteile (Oxide, Karbonate, Kohlenstoff oder Ruß) und Keramikpartikel enthält, die beim späteren Sintern gemäß Verfahrensschritt e) im wesentlichen unverändert bleiben,

c) aus einer Vielzahl solcher Schichten (21,22,25,26) wird ein Stapel gebildet, in welchem sich die Suspensionsmuster (23,24,27,28) in großen Teilbereichen (29) überlappen und der gegebenenfalls oberhalb und/oder unterhalb mit von Suspensionsmustern freien, als Decklagen dienenden Suspensionsschichten versehen ist,

d) der Stapel wird durch einen Preßvorgang verdichtet und anschließend oder erst nach dem Sintern längs von Schnittlinien (30,31) in Längs- und in Querrichtung zerteilt,

e) der verdichtete Stapel oder die daraus entstandenen Einzelkörper (32) werden mit entsprechendem Aufheiz- und Abkühlverlauf bei Temperaturen von 1000 °C oder höher gesintert,

f) die quaderförmigen Körper (1) werden in einem Autoklaven, gegebenenfalls nach vorheriger Evakuierung, in eine Metallschmelze zum Einpressen von Metall in die Bereiche (2,3) mittels Überdruck getaucht und dann oberhalb der Metallschmelze abgekühlt mit anschließender Reduktion des Überdruckes auf Normaldruck,

g) die gesinterten und mit erstarrtem Metall (37) gefüllten quaderförmigen Körper (1) werden an den Stirnflächen (4,5) und auf die Seitenflächen (6, 7) herumreichend mit Kontaktschichten (13,14) versehen, **gekennzeichnet** durch die weiteren Verfahrensschritte:

h) nach dem Verfahrensschritt f) werden die quaderförmigen Körper (1) zur mechanischen Behandlung mit Abriebpulver, insbesondere SiC-Pulver feiner Körnung (im Mittel 50 μm Korndurchmesser) im Verhältnis von 50 bis 200 g Pulver auf 1500 g Körper intensiv vermischt und dann zusammen mit Wasser im Verhältnis von 500 bis 1000 g Wasser auf 1700 g Feststoffgemisch in einem Mahlgefäß umgewälzt,

i) im Verfahrensschritt g) werden Kontaktschichten (13,14), die Nickel oder Silber enthalten, durch chemische oder galvanische Abscheidung, mittels Bedrucken (Siebdruck), Tauchverfahren, durch Kathodenzerstäubung (sputtering), durch Aufdampfen oder mittels Metallspritzverfahren aufgetragen.

13. Verfahren nach Anspruch 12,
**dadurch gekennzeichnet, daß**
im Verfahrensschritt b) die Suspension in Form von Mustern (23,24,27,28) aufgetragen wird, die die abgegrenzten Bereiche darstellen und über die gesamte Breite (33) der Schichten (21,22,25,26) miteinander durch Brücken (39) verbunden sind, die bis zu den Außenrändern (38) reichen.

14. Verfahren nach Anspruch 12,
**dadurch gekennzeichnet, daß**
beim Verfahrensschritt h) ein Mahlgefäß aus V2A-Stahl verwendet wird, das auf einem Walzenstuhl mit 60 bis 100 Umdrehungen pro Minute gedreht wird.

**Claims**

1. Electrical multilayer component, preferably a capacitor, PTC thermistor or varistor, having the features:

a) a sintered parallelepiped body (1), consisting of layers (9, 10) of ceramic material having dielectric or semiconductive properties;

b) between the layers (9, 10) of ceramic material there are connecting metallisations (11, 12) consisting of a metal or a metal alloy whose melting temperatures are considerably lower than the temperature required for sintering;

c) regions (2, 3) for the connecting metallisations (11, 12) between the layers (9, 10) of ceramic material contain mutually opposite end sides (4, 5), alternating from layer to layer, and in each case in a partial region (15, 16) towards the adjacent side faces (6, 7), supporting elements in the form of ceramic particles (8) distributed in the metal volume;

d) reaching around on the end faces (4, 5) and on the side faces (6, 7) there are contact layers (13, 14), which in each case electrically conductively connect the connecting metallisations (11, 12), and can be soldered themselves or by means of a further metal coating,
characterised by the additional features:

e) in the case of the parallelepiped body (1), edges (17) between the end faces (4, 5) and the side faces (6, 7), edges (18) between the end faces (4, 5) and the lower side of the body, and edges (20) between the upper side of the body and the side faces (6, 7) are chamfered by mechanical machining in such a manner that the connecting metallisations (11, 12) reach up to the contact layers;

f) the contact layers (13, 14) on the end faces (4, 5) cover at least the partial regions (15, 16) of the regions (2, 3) on the side faces (6, 7) which are filled with connecting metallisations (11, 12).

2. Electrical multilayer component according to Claim 1, characterised in that the connecting metallisations (11, 12) consist of a metal or a metal alloy having the property that, in the fluid state, it wets the faces of the layers (9, 10) consisting of ceramic material in the regions (2, 3) well.

3. Electrical multilayer component according to Claim 1, characterised in that the connecting metallisations (11, 12) consist of a lead-indium alloy having an indium component of equal to or greater than 0.5% by weight, preferably 2.5 to 20% by weight.

4. Electrical multilayer component according to Claim 1, characterised in that the connecting metallisations (11, 12) consist of a lead-silver-indium alloy, having at least 0.5% by weight of indium and a total of 20% by weight of silver and indium.

5. Electrical multilayer component according to Claim 1, characterised in that the connecting metallisations (11, 12) consist of copper-indium or silver-indium alloys.

6. Electrical multilayer component according to Claim 1, characterised in that the contact layers (13, 14) consist of nickel or alloys having a high nickel component.

7. Electrical multilayer component according to Claim 1, characterised in that the contact layers (13, 14) consist of silver or alloys having a high silver component.

8. Electrical multilayer component according to Claim 1, characterised in that the contact layers (13, 14) are multilayered and, in the neighbourhood of the parallelepiped body (1), consist of a first layer of aluminium (Al) or chromium (Cr), a second layer thereon of nickel (Ni) or nickel-vanadium (NiV) and a third layer thereon of silver (Ag).

9. Electrical multilayer component according to Claim 8, characterised in that a tin layer (Sn) is arranged over the silver layer.

10. Electrical multilayer component according to Claim 8, characterised in that the aluminium layer is 0.5 $\mu$m thick, the second layer of NiV is 1.5 $\mu$m thick and the third layer is 1 $\mu$m thick.

11. Electrical multilayer component according to Claim 1, characterised in that at least the regions of the side faces (6, 7) which are free of contact layers (13, 14) are covered with electrically insulating and moisture-proof material.

12. Method for producing an electrical multilayer component according to Claim 1, with the following method steps:

a) 0.03 to 0.1 mm thick layers (21,22,25,26) are produced and dried, whose width (33) and length (34) are each a multiple of the width and length of the subsequent parallelepiped body (1), from a suspension which contains dielectric or semiconductive material in a fine distribution,

b) patterns (23, 24, 27, 28), in a specific arrangement and in a thickness of 0.005 to 0.02 mm are deposited (for example printed on) from a suspension and dried onto these layers (21, 22, 25, 26), in the form of delineated regions, which suspension contains components (oxides, carbonates, carbon or soot) which escape during the subsequent sintering in accordance with method step e) and ceramic particles which remain essentially unchanged during the subsequent sintering in accordance with method step e),

c) a stack is formed from a multiplicity of such layers (21, 22, 25, 26), in which stack the suspension patterns (23, 24, 27, 28) overlap in large partial regions (29), and which, if required, is provided above and/or underneath with suspension layers which are free of suspension patterns and are used as covering layers,

d) the stack is compressed by means of a pressing process and is split in the longitudinal and in the lateral direction along cutting lines (30, 31), subsequently or not until after sintering,

e) the compressed stack or the individual bodies (32) produced therefrom are sintered with a suitable heating and cooling characteristic at temperatures of 1000°C or above,

f) in an autoclave, if necessary after previous evacuation, the parallelepiped bodies (1) are immersed in a metal melt in order to press metal into the regions (2, 3) by means of overpressure and are then cooled above the metal melt, with subsequent reduction of the overpressure to normal pressure,

g) the parallelepiped bodies (1), which have been sintered and filled with solidified metal (37), are provided with contact layers (13, 14), which reach around on the end faces (4, 5) and on the side faces (6, 7),

characterised by the additional method steps:

h) after method step f), the parallelepiped bodies (1) are intensively mixed, for mechanical treatment, with abrasion powder, preferably SiC powder having a fine grain (mean grain diameter 50 $\mu$m) in the ratio of 50 to 200 g of powder to 1500 g of bodies, and are then rotated in a grinding vessel, together with water in the ratio of 500 to 1000 g of water to 1700 g of solid mixture,

i) in method step g), contact layers (13, 14), which contain nickel or silver, are applied by means of chemical or galvanic deposition, by means of printing (screen printing), immersion methods, by cathode sputtering, by vapour deposition, or by means of metal spraying methods.

13. Method according to Claim 12, characterised in that, in method step b), the suspension is applied in the form of patterns (23,24,27,28) which represent the delineated regions and are connected to one another by means of links (39) over the complete width (33) of the layers (21,22,25,26), which links extend up to the outer edges (38).

14. Method according to Claim 12, characterised in that, in method step h), a grinding vessel consisting of V2A steel is used which is rotated at 60 to 100 revolutions per minute on a roller mill.

**Revendications**

1. Composant électrique à couches multiples, notamment condensateur, conducteur à froid ou varistance, présentant les caractéristiques suivantes :

   a) un corps parallélépipédique fritté (1) formé de couches (9,10) réalisées en un matériau céramique et possédant des propriétés diélectriques ou semiconductrices;

   b) entre les couches (9,10) réalisées en un matériau céramique sont disposées des métallisations de raccordement (11,12) réalisées en un métal ou en un alliage métallique, dont les températures de fusion sont nettement inférieures à la température nécessaire pour le frittage;

   c) des zones (2,3) pour les métallisations de raccordement (11,12) entre les couches (9,10) réalisées en un matériau céramique contiennent alternativement d'une couche à la suivante des faces frontales (4,5) opposées et, respectivement dans une zone partielle (15,16), en direction des surfaces frontales contiguës (6,7), des éléments d'appui se présentant sous la forme de particules céramiques (8) réparties dans le volume de métal;

   d) des couches de contact (13,14), qui relient d'une manière électriquement conductrice respectivement les métallisations de raccordement (11,12) et sont soudables d'elles-mêmes ou bien moyennant un revêtement métallique supplémentaire, entourent les surfaces frontales (4,5) et les surfaces latérales (6,7),

   caractérisé par les particularités suivantes :

   e) dans le cas du corps parallélépipédique (1), les arêtes (17) entre les surfaces frontales (4,5) et les surfaces latérales (6,7), les arêtes (18) entre les surfaces frontales (4,5) et la face inférieure du corps ainsi que les arêtes (20) entre la face supérieure du corps et les surfaces latérales (6,7) sont arrondies au moyen d'un usinage mécanique, en sorte que les métallisations de raccordement (11,12) s'étendent jusqu'aux couches de contact;

   f) des couches de contact (13,14) situées sur les surfaces frontales (4,5) recouvrent, au niveau des surfaces latérales (6,7), au moins les parties (15,16), qui sont garnies de métallisations de raccordement (11,12), des zones (2,3).

2. Composant électrique à couches multiples suivant la revendication 1, caractérisé par le fait que les métallisations de raccordement (11,12) réalisées en un métal ou en un alliage métallique ont la propriété de bien mouiller, à l'état liquide, les surfaces des couches (9,10) réalisées en un matériau céramique dans les zones (2,3).

3. Composant électrique à couches multiples suivant la revendication 1, caractérisé par le fait que les métallisations de raccordement (11,12) sont constituées d'un alliage de plomb-indium comportant un pourcentage d'indium égal ou supérieur à 0,5 % en poids et en particulier entre 2,5 et 20 % en poids.

4. Composant électrique à couches multiples suivant la revendication 1, caractérisé par le fait que les métallisations de raccordement (11,12) sont réalisées en un alliage de plomb-argent-indium comportant au moins 0,5 % en poids d'indium et au total 20 % en poids d'argent et d'indium.

5. Composant électrique à couches multiples suivant la revendication 1, caractérisé par le fait que les métallisations de raccordement (11,12) sont réalisées en des alliages de cuivre-indium ou d'argent-indium.

6. Composant électrique à couches multiples suivant la revendication 1, caractérisé par le fait que les couches de contact (13,14) sont réalisées en nickel ou en des alliages possédant une teneur élevée en nickel.

7. Composant électrique à couches multiples suivant la revendication 1, caractérisé par le fait que les couches de contact (13,14) sont réalisées en argent ou en des alliages possédant une teneur élevée en argent.

8. Composant électrique à couches multiples suivant la revendication 1, caractérisé par le fait que les couches de contact (13,14) sont formées de couches multiples et sont constituées, au voisinage du corps parallélépipédique (1), par une première couche d'aluminium (Al) ou de chrome (Cr), à laquelle est superposée une seconde couche de nickel (Ni) ou de nickel-vanadium (Ni-V), et sur laquelle est disposée une troisième couche d'argent (Ag).

9. Composant électrique à couches multiples suivant la revendication 8, caractérisé par le fait qu'une couche d'étain (Sn) est disposée sur la couche d'argent.

10. Composant électrique à couches multiples suivant la revendication 8, caractérisé par le fait que la couche d'aluminium possède une épaisseur de 0,5 $\mu$m, la seconde couche en Ni-V possède une épaisseur de 1,5 $\mu$m et la troisième couche possède une épaisseur de 1 $\mu$m.

11. Composant électrique à couches multiples suivant la revendication 1, caractérisé par le fait qu'au moins les zones, qui ne comportent pas les couches de contact (13,14), des surfaces latérales (6,7), sont recouvertes par un matériau électriquement isolant et étanche à l'humidité.

12. Procédé pour fabriquer un composant électrique à couches multiples suivant la revendication 1, comprenant les étapes opératoires suivantes :

a) on fabrique des couches (21,22,25,26) qui possèdent une épaisseur comprise entre 0,03 et 0,1 mm, dont la longueur (33) et la largeur (34) sont égales respectivement à un multiple de la largeur et de la longueur du corps parallélépipédique (1) obtenu ultérieurement, à partir d'une suspension qui contient une substance diélectrique ou semiconductrice finement répartie, et on les fait sécher,

b) sur ces couches (21,22,25,26), on dépose (par exemple par impression), sous la forme de zones délimitées, des configurations (23,24,27,28) rangées selon une disposition déterminée et possédant une épaisseur comprise entre 0,005 et 0,02 mm, à partir d'une suspension, et on les fixe par séchage, la suspension contenant des constituants (oxydes, carbonates, carbone ou suie), qui s'évacuent lors du frittage ultérieur conformément à l'étape opératoire e), et des particules céramiques qui restent sensiblement inchangées lors du frittage ultérieur conformément à l'étape opératoire e),

c) à partir d'une multiplicité de telles couches (21,22,25,26) on forme une pile, dans laquelle les configurations (23,24,27,28) formées par la suspension se chevauchent dans des zones partielles étendues et qui comporte éventuellement, à sa partie supérieure et/ou à sa partie inférieure, des couches de suspension qui sont exemptes de configurations formées par la suspension et sont utilisées comme couches de revêtement,

d) on comprime la pile au moyen d'une opération de compactage et on la subdivise ensuite ou seulement après frittage, le long de lignes de découpage (30,31) s'étendant dans la direction longitudinale et dans la direction transversale,

e) on fritte la pile compactée ou les corps individuels (32) obtenus à partir de cette pile, par chauffage à une allure correspondante et par refroidissement à des températures de 1000°C ou plus,

f) on plonge les corps parallélépipédiques (1), dans un autoclave, éventuellement après formation préalable d'un vide, dans une masse de métal fondu pour introduire au moyen d'une surpression le métal dans les zones (2,3) et on les refroidit ensuite au-dessus de la masse métallique fondue avec réduction ultérieure de la surpression à la pression normale,

g) on applique des couches de contact (13,14) de manière qu'elles entourent les surfaces frontales (4,5) et les surfaces latérales (6,7) sur les corps parallélépipédiques (1) frittés et remplis par le métal (37) solidifié,

caractérisé par les étapes opératoires suivantes :

h) après l'étape opératoire f), pour le traitement mécanique, on mélange d'une manière intensive au corps parallélépipédique (1), une poudre abrasive, notamment une poudre de SiC à granulation fine (diamètre moyen des grains 50 $\mu$m), dans le rapport de 20 à 200 g de poudre à 1500 g du corps, puis on les entraîne en circulation, conjointement avec de l'eau, dans le rapport de 500 à 1000 g d'eau pour 1700 g du mélange de substances solides, dans un récipient de broyage,

i) lors de l'étape opératoire g), on dépose des couches de contact (13,14), qui contiennent du nickel ou de l'argent, au moyen d'un dépôt chimique ou galvanique, au moyen d'une impression (sérigraphie), au moyen d'un procédé par immersion, au moyen d'une pulvérisation cathodique (sputtering), par dépôt par évaporation ou au moyen d'un procédé de projection de métal.

**13.** Procédé suivant la revendication 12, caractérisé par le fait que lors de l'étape opératoire b), on dépose la suspension sous la forme de configurations (23,24,27,28), qui représentent les zones limitées et on les réunit entre elles, sur toute la largeur (33) des couches (21,22,25,26) par des ponts (39) qui s'étendent jusqu'aux bords extérieurs (38).

**14.** Procédé suivant la revendication 12, caractérisé par le fait que lors de l'étape opératoire h), on utilise un récipient de broyage en acier V2A, qu'on fait tourner à raison de 60 à 100 rotations par minute sur un moulin à cylindres.

# FIG 1

# FIG 2

# FIG 3

# FIG 4

# FIG 5

# FIG 6

# FIG 7

# FIG 8

# FIG 9

# FIG 10

# FIG 11

## FIG 12

## FIG 13

## FIG 14

## FIG 15